# FASCICULE DE BREVET EUROPEEN

(11) **EP 4 056 345 B1**
(45) Date de publication et mention de la délivrance du brevet: **19.07.2023**
(21) Numéro de dépôt: 22160947.2
(22) Date de dépôt: 09.03.2022
(51) Int. Cl.: B29C 37/00, B29C 70/08, B29C 70/20, B29C 70/24, F17C 1/16, B29C 70/44, F17C 1/08, B29L 31/00, B32B 38/00, B29C 33/52

(54) **PROCÉDÉ POUR LA FABRICATION D'UN RÉSERVOIR POUR LA CONTENANCE D'UN GAZ SOUS PRESSION, NOTAMMENT DE L HYDROGÈNE**
VERFAHREN ZUR HERSTELLUNG EINES BEHÄLTERS FÜR DIE AUFNAHME EINES UNTER DRUCK STEHENDEN GASES, INSBESONDERE VON WASSERSTOFF
METHOD FOR MANUFACTURING A TANK FOR CONTAINING A PRESSURISED GAS, IN PARTICULAR HYDROGEN

(30) Priorité: 09.03.2021 FR 2102315
(43) Date de publication de la demande: 14.09.2022
(73) Titulaire: Faurecia Systèmes d'Echappement, 92000 Nanterre (FR)
(72) Inventeur: MORET, Marc, 44240 La Chapelle sur Erdre (FR); DE BRUX, Antoine, 44350 Guérande (FR)
(74) Mandataire: Lavoix

(56) Documents cités:
- WO-A1-96/30676
- DE-A1- 19 749 950
- US-A- 5 462 193
- US-A- 5 647 503
- US-A1- 2014 326 738
- US-A1- 2019 263 089
- US-A1- 2020 158 287

## Description

### Domaine technique

L'invention concerne un procédé pour la fabrication d'un réservoir apte à contenir un gaz sous pression, d'encombrement réduit, plus particulièrement, mains non exclusivement, sous la forme d'une plaque prismatique.

### Technique antérieure

Le stockage d'un gaz sous pression dans un réservoir transportable est généralement réalisé dans un réservoir cylindrique ou sphérique, en métal ou en matériau composite.

Du fait de sa faible masse volumique, l'hydrogène gazeux est stocké à des pressions relativement élevées, couramment comprises entre 200 bars et 700 bars (2.10⁷ à 7.10⁷ Pa).

Ce type de réservoir de l'art antérieur, par sa forme et son volume, est difficile à intégrer dans un véhicule, cette intégration se faisant généralement aux dépens de l'habitabilité dudit véhicule.

Un réservoir de forme prismatique tel que décrit dans le document US 8 651 268 est plus facilement intégrable dans un véhicule. Cependant, le réservoir décrit dans ce document de l'art antérieur est destiné aux petites contenances, comprises en 5 cm³ et 500 cm³, qui ne sont pas adaptées à la plupart des applications dans le domaine de la mobilité ou au stockage sur des lieux de production de l'hydrogène, notamment en tant que vecteur énergétique.

À cette fin, les inventeurs, ont conçu un réservoir décrit dans la demande co-pendante FR2102314, lequel réservoir est de forme prismatique et constitué d'un matériau composite renforcé par des fibres continues et comprend une enveloppe externe couvrant toutes les faces du prisme et définissant une cavité interne pour le stockage du gaz, lequel réservoir comprend des fibres de renforts s'étendant, à l'intérieur de ladite cavité interne, entre deux faces non contiguës du réservoir.

DE 197 49 950 A1, US 5 462 193 A, US 2014/326738 A1 et US 5 647 503 A décrivent des procédés pour la fabrication d'un réservoir composite.

Ainsi, les renforts fibreux à l'intérieur du réservoir participent à la résistance de celui-ci et permettent de mieux répartir les contraintes dans l'enveloppe externe vis-à-vis de la sollicitation engendrée par la pression interne, mais aussi de conférer audit réservoir les qualités structurelles d'un panneau vis-à-vis des sollicitations externes, ce qui, en combinaison avec sa forme prismatique, facilite l'intégration dudit réservoir dans la structure d'un véhicule ou d'un aéronef.

Le document DE 197 49 950 décrit un réservoir apte à contenir un gaz sous pression dans une cavité et comprenant des renforts internes s'étendant dans la cavité, lesdits renforts se présentant sous la forme de filaments s'étendant dans des tubes guides entre deux faces d'une enveloppe externe du réservoir. Ainsi, lesdits filaments se prolongent d'un tube guide à l'autre en cheminant entre ces tubes guides sur les faces extérieures de l'enveloppe externe.

Le document US 5 462 193 décrit un réservoir apte à contenir un fluide sous pression dans une cavité et comprenant des renforts internes s'étendant dans ladite cavité, les renforts se présentant sous la forme de fibres s'étendant entre deux faces opposées d'une enveloppe externe délimitant cette cavité.

Le document US 2014/326738 décrit un réservoir de section circulaire apte à contenir un fluide sous pression dans une cavité et comprenant des renforts internes s'étendant diamétralement de ladite cavité entre les parois de l'enveloppe interne, et dont le procédé de fabrication consiste à draper ledit réservoir sur un noyau fusible, constituant la future cavité puis à faire fondre ledit noyau.

Le document US 5 647 503 décrit un réservoir apte à contenir un fluide sous pression comprenant une enveloppe délimitant une cavité dans laquelle est contenu le fluide, et comprenant des fibres de renfort s'étendant dans ladite cavité entre deux faces de l'enveloppe. Le procédé de fabrication décrit dans ce document consiste à draper le réservoir sur un noyau en mousse constituant la future cavité, puis, après injection / polymérisation d'une résine à dissoudre ledit noyau au moyen d'un solvant tel que de l'acétone.

### Résumé de l'invention

L'invention concerne un procédé pour la fabrication d'un réservoir composite à renfort fibreux continu de forme prismatique et d'épaisseur e, pour le stockage d'un gaz sous pression dans une cavité interne dudit réservoir, lequel réservoir comprend des fibres s'étendant entre deux faces non contiguës dudit réservoir à travers la cavité interne, ledit procédé comprenant les étapes consistant à :
i. obtenir une préforme fibreuse prismatique d'une épaisseur e comprenant des renforts continus tridimensionnels dans toute son épaisseur ;
ii. imprégner une couche externe de ladite préforme par un polymère sur une épaisseur inférieure à 1/4 de l'épaisseur e de sorte à constituer une enveloppe externe composite s'étendant sur toutes les faces du prisme ;
iii. réaliser une couche étanche constituant une doublure interne, d'une épaisseur inférieure à 1/10^{ème} de l'épaisseur e entre l'enveloppe externe et le réseau fibreux contenu dans la cavité du réservoir,
   dans lequel l'étape ii) comprend, après l'étape i) des étapes consistant à :
   ii.a emballer la préforme obtenue à l'étape i) dans une enceinte étanche ;
   ii.b. tirer au vide l'enceinte comprenant la préforme ;
   ii.c remplir l'enceinte comprenant la préforme d'un liquide ;
   ii.d congeler la préforme imbibée du liquide ;
   ii.e lyophiliser une couche extérieure de la préforme ;
   ii.f imprégner ladite couche extérieure d'un polymère de sorte à constituer l'enveloppe extérieure ;
   ii.g évacuer le liquide restant dans la préforme.

Ainsi, la présence du liquide permet de n'imprégner de polymère que la couche extérieure constituant la future enveloppe externe au cours de l'étape ii). Ne nécessitant pas un outillage spécialement usiné, ce procédé est économique et notamment adapté à une fabrication sur mesure mais est également adaptable à une fabrication de série.

L'invention est mise en oeuvre selon les modes de réalisation et les variantes exposées ci-après lesquels sont à considérer individuellement ou selon toute combinaison opérante.

La numérotation des étapes indiquée ci-dessus ne définit pas l'ordre chronologique de réalisation des étapes, cet ordre est différent selon les modes de réalisation exposés ci-après ou même selon des variantes de ces modes de réalisation. Il en est de même lorsque ces étapes comprennent des étapes intermédiaires pour leur mise en oeuvre, dans ce cas certaines étapes intermédiaires sont réalisables ou réalisées avant, après ou parallèlement aux autres étapes principales ou aux autres étapes intermédiaires de l'étape principale, ou même des éventuelles étapes intermédiaires de ces autres étapes.

La description ci-après précise lorsqu'un ordre de réalisation est essentiel.

Sauf indication spécifique, dans tout le texte la conjonction de coordination « ou » doit être comprise comme inclusive et équivaut à « et/ou ».

Selon des variants de réalisation, le liquide introduit à l'étape ii.c) est de l'eau ou un sol-gel.

Avantageusement, le procédé objet de l'invention comprend une étape, avant ou après l'étape ii) d'imprégnation de l'enveloppe externe, consistant à intégrer à la préforme un raccord traversant ladite enveloppe externe et apte à mettre en communication fluidique, l'intérieur de la préforme et l'extérieur.

Ce raccord est avantageusement, mais pas nécessairement, utilisé dans la pièce finie pour remplir le réservoir de gaz et tirer le gaz dudit réservoir, mais est également utilisé au cours du procédé de fabrication objet de l'invention.

Ainsi, lorsque le liquide introduit au cours de l'étape ii.c) est de l'eau le raccord est utilisé dans l'étape ii.g) pour évacuer l'eau de la préforme par aspiration et le procédé comprend au cours de l'étape iii), une fois l'eau évacuée, une étape consistant à :
iii.b consolider le réseau fibreux dans la cavité interne.

Selon une variante, l'étape iii.b) comprend la pulvérisation d'un polymère à travers le raccord à l'intérieur de la préforme de sorte à constituer la doublure interne et consolider le réseau fibreux dans ladite cavité.

Selon une autre variante, l'étape iii.b) comprend l'injection d'un sol-gel dans la cavité interne et la consolidation du réseau fibreux dans ladite cavité par l'évaporation de la phase liquide du sol-gel.

Lorsque le liquide introduit au cours de l'étape ii.c) est un sol-gel le raccord est utilisé au cours de l'étape ii.g) pour évaporer la phase liquide du sol-gel à l'intérieur de la préforme et l'étape iii) est réalisée par la polymérisation du sol-gel.

Avantageusement le procédé objet de l'invention comprend après l'étape iii) une étape consistant à :
iv. créer des bandes de maintien entourant le réservoir par enroulement filamentaire.

### Brève description des dessins

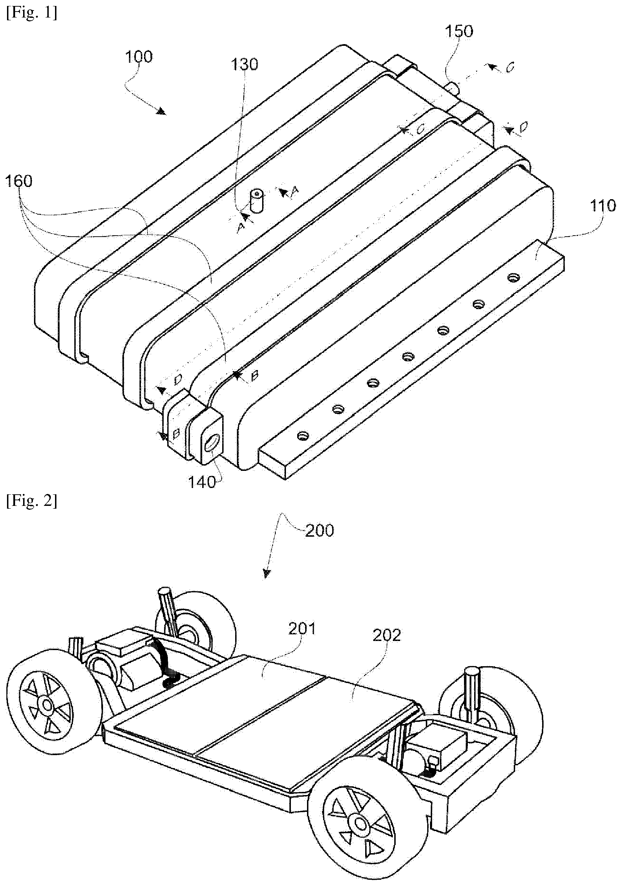

L'invention est exposée ci-après selon ses modes de réalisation préférés, nullement limitatifs, en référence aux figures 1 à 12 dans lesquelles :
**Fig.1**
   [Fig.1] représente en perspective vue de dessus un exemple de réalisation du réservoir objet de l'invention ;
**Fig.2**
   [Fig.2] représente selon une vue en perspective un exemple d'intégration d'un réservoir objet de l'invention à un châssis d'automobile.
**Fig.3**

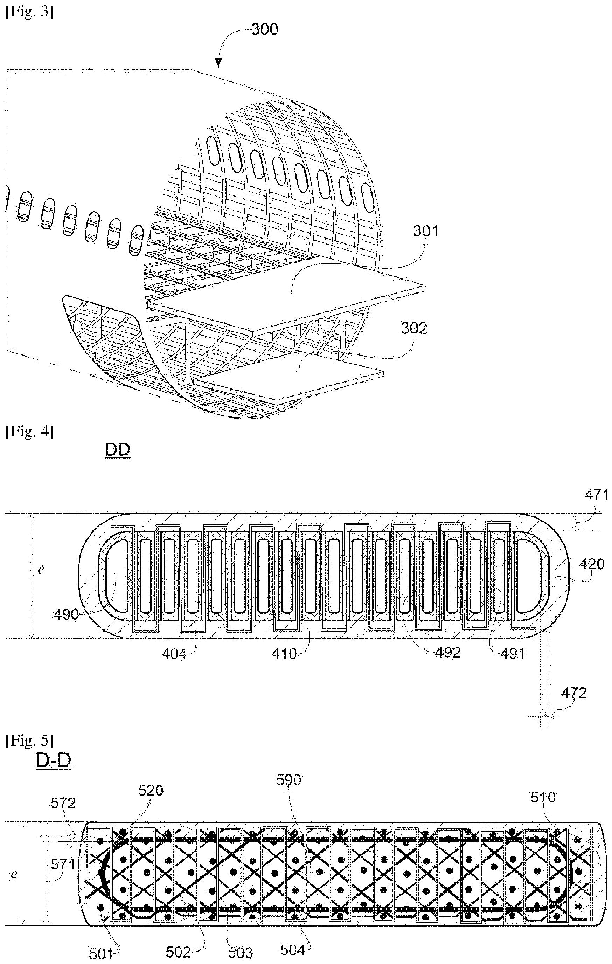

   [Fig.3] montre selon une vue en perspective un exemple d'intégration d'un réservoir objet de l'invention aux planchers d'un aéronef ;
**Fig.4**
   [Fig.4] montre selon une vue en coupe DD définie [Fig.1], une première version de réalisation de la structure du réservoir ne faisant pas partie de la présente invention ;
**Fig.5**
   [Fig.5] montre schématiquement, selon une vue en coupe DD définie [Fig.1], la structure interne du réservoir, selon une autre version de réalisation, objet de la présente invention ;
**Fig.6**

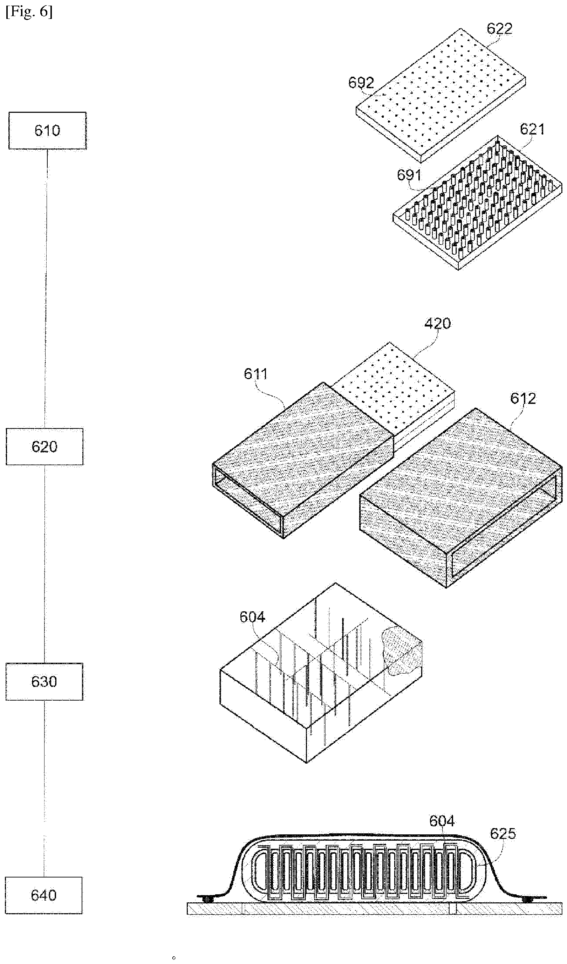

   [Fig.6] est un synoptique d'un premier mode de réalisation d'un procédé ne faisant pas partie de la présente invention ;
**Fig.7**

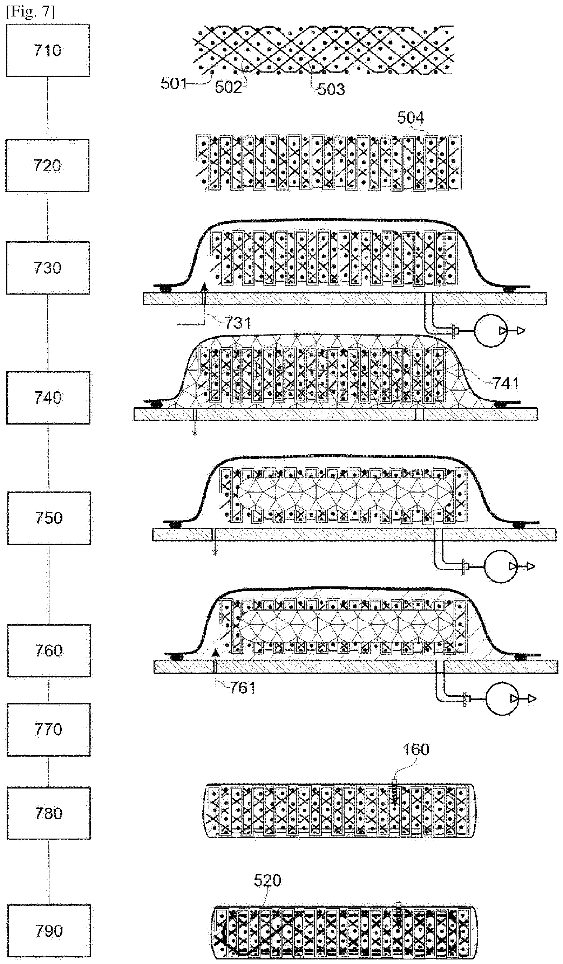

   [Fig.7] est un synoptique d'un deuxième mode de réalisation du procédé objet de l'invention ;
**Fig.8**

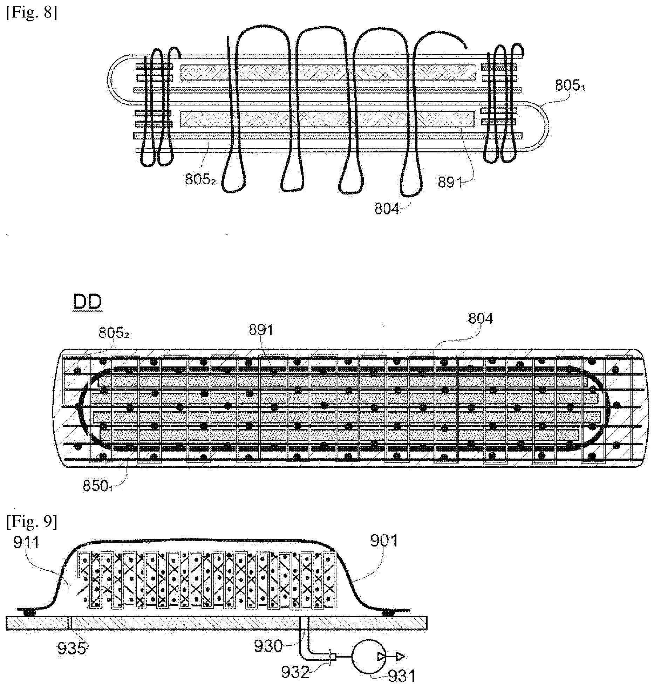

   [Fig.8] illustre une variante de l'étape de drapage du procédé objet de l'invention selon son deuxième mode de réalisation ;
**Fig.9**
   [Fig.9] montre schématiquement selon une vue en coupe un exemple d'outillage pour la mise en oeuvre du procédé objet de l'invention ;
**Fig.10**

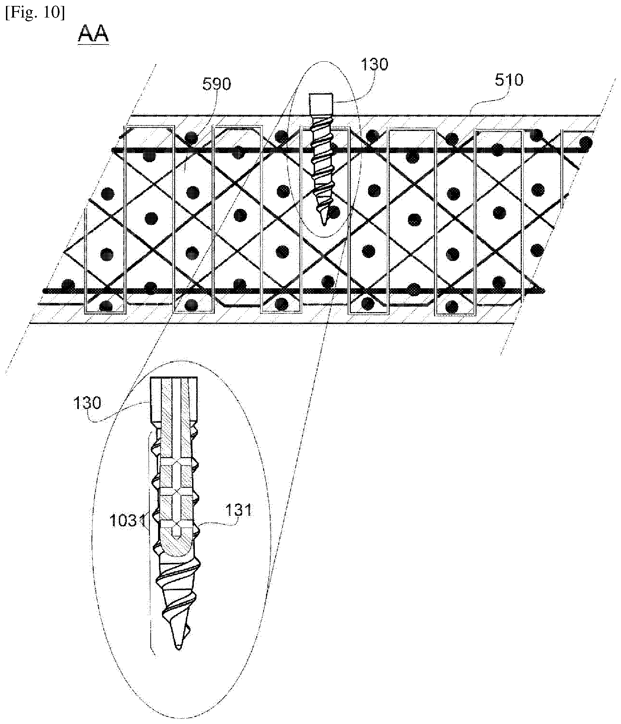

   [Fig.10] est une vue en coupe partielle selon AA définie [Fig.1], d'un exemple d'intégration d'un raccord, et comprend une vue de détail en écorché dudit raccord ;
**Fig.11**

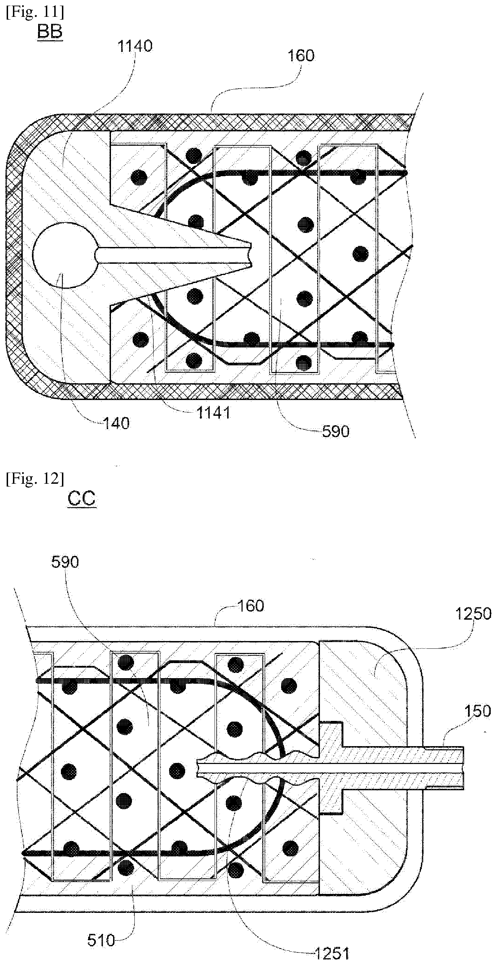

   [Fig.11] montre selon une vue en coupe partielle BB définie [Fig.1], un autre exemple d'intégration d'un raccord selon le procédé objet de l'invention ;
**Fig.12**
   [Fig.12] représente un troisième d'intégration d'un raccord selon le procédé objet de l'invention, selon une vue en coupe partielle CC définie [Fig.1] ;

### Description des modes de réalisation

[Fig.1], selon un exemple de réalisation, le réservoir (100) obtenu par le procédé objet de l'invention est de forme générale prismatique à base rectangulaire et est adapté pour contenir un gaz sous pression, notamment de l'hydrogène, à une pression pouvant aller jusqu'à 1000 bars (10⁸ Pa)

Ledit réservoir comprend optionnellement une bride (110) permettant sa fixation par tout moyen, notamment par boulonnage, à toute structure, notamment celle d'un véhicule. Ladite bride est avantageusement intégrée à l'enveloppe composite lors de la fabrication du réservoir et vient de matière avec ladite enveloppe.

Le réservoir (100) comprend un raccord (130, 140, 150) pour permettre le remplissage et le tirage du gaz qu'il contient.

La [Fig.1] montre 3 exemples de réalisation des raccords sur le même réservoir, l'homme du métier comprend qu'un seul raccord selon l'un quelconque de ces modes de réalisation est nécessaire, sans pour autant exclure la possibilité d'une pluralité de raccords sur le même réservoir.

Selon un exemple de réalisation, le réservoir (100) comprend une ou plusieurs bandes de renfort (160) destinées, d'une part, à maintenir les raccords et d'autre part à améliorer la résistance du réservoir, tant vis-à-vis de la pression interne que des sollicitations extérieures qu'il subit au cours de son utilisation.

[Fig.2] et [Fig.3], selon des exemples d'utilisation, le réservoir (201, 202, 301, 302) objet de l'invention est intégré comme élément de plancher dans une structure, par exemple dans le châssis (200) d'un véhicule électrique à pile à combustible ou dans le plancher passager ou le plancher cargo de la structure d'un aéronef (300).

Quel que soit le mode de réalisation, le réservoir comprend une enveloppe externe constituée d'un matériau composite à renforts fibreux et matrice polymère continus et une cavité interne étanche délimitée par les surfaces intérieures de l'enveloppe externe, la cavité interne comprenant une pluralité d'alvéoles ouvertes, délimités par des renforts s'étendant entre les faces de l'enveloppe externe. Ainsi, outre le rôle de contenant, la cavité du réservoir à un rôle structurel tant vis-à-vis de la tenue du réservoir à la pression interne que de la résistance du réservoir aux sollicitations externes.

Le procédé objet de l'invention vise à créer l'enveloppe externe et la cavité alvéolée, selon différents modes de réalisation.

[Fig.4] selon une première version de réalisation, qui ne fait pas partie de la présente invention, le réservoir objet de l'invention comprend une enveloppe interne (420), comprenant une pluralité d'espaceurs creux (491), s'étendant entre deux faces de ladite enveloppe interne et répartis sur toute la surface de ces deux faces.

Lesdits espaceurs creux (491) sont de forme quelconque mais discontinus de sorte à ne pas cloisonner de manière étanche le volume interne de ladite enveloppe interne (420). De même lesdits espaceurs ne sont pas nécessairement perpendiculaires aux parois entre lesquels ils s'étendent.

Selon cet exemple de réalisation, les alvéoles ouvertes sont délimitées dans la cavité interne par lesdits espaceurs.

Selon cet exemple de réalisation, les espaceurs tubulaires (491) sont cylindriques et viennent de matière avec les parois de l'enveloppe interne et leurs alésages (492) traversent lesdites parois.

L'enveloppe interne (420) délimite une cavité interne (490) étanche apte à contenir un gaz. Ladite enveloppe interne est, selon des exemples de réalisation, constituée de polyéthylène haute densité ou de polyamide PA6.

L'enveloppe externe (410) est constituée d'un matériau composite à matrice polymère et renforts fibreux continus, comprenant un empilement de plis fibreux selon plusieurs directions de renfort, pour un taux de fibres compris entre 40 % et 65 % de fibres de carbone, de verre, d'aramide ou toute combinaison, sans que ces exemples ne soient limitatifs.

Des fibres (404) s'étendent dans l'enveloppe externe (410) et entre les faces de celle-ci, en traversant la cavité interne (490) du réservoir dans les alésages (492) des espaceurs creux (491). Ces fibres (404) sont imprégnées du polymère, thermodurcissable ou thermoplastique, constituant la matrice de l'enveloppe externe, lequel remplit les alésages (492) des espaceurs creux.

Ainsi, les espaceurs creux (491) comprenant des fibres (404) constituent des renforts transversaux, mis en tension par la pression dans la cavité interne (490) et participant à la résistance du réservoir. Ils constituent aussi des raidisseurs participant à la rigidité et la résistance en flexion de la plaque composite formée par le réservoir.

[Fig.5], selon une deuxième version de réalisation, objet de la présente invention, le réservoir se présente sous la forme d'un réseau tridimensionnel de plis fibreux, de carbone, de verre, d'aramide uniquement ou en combinaison, de sorte à conférer audit réservoir les propriétés de résistance mécanique, à la pression, au choc et au poinçonnement, selon l'application visée.

Le réservoir comprend une enveloppe externe (510) dans laquelle les fibres sont emprisonnées dans une matrice polymère, de nature thermoplastique ou thermodurcissable, constituant ainsi une enveloppe composite à renforts fibreux continus. Cette enveloppe (510) s'étend sur les 6 faces du prisme et comporte, sur sa face interne, une doublure étanche (520), également désignée par le terme « *liner* »*.*

Cette doublure étanche (520) délimite une cavité interne (590) dans laquelle le gaz, notamment du dihydrogène, peut être contenu sous pression.

Des fibres (501, 502, 503, 504) contenues dans l'enveloppe externe sur une des faces du prisme, où elles sont emprisonnées dans la matrice, s'étendent jusqu'à une autre face de l'enveloppe où elles sont également emprisonnées dans la matrice polymère, en traversant la cavité interne (590) du réservoir. Le taux de fibres dans la cavité interne est fortement réduit comparativement au taux de fibres dans l'enveloppe. Ainsi, les fibres ou ensembles de fibres dans la cavité interne délimitent des alvéoles ouvertes dans cette cavité.

Quelle que soit la version de réalisation, le réservoir se présente sous la forme d'une plaque prismatique d'épaisseur e préférentiellement inférieure ou égale à 1/10^{ème} du plus grand côté du prisme.

L'épaisseur (471, 571) de l'enveloppe externe (410, 510) est fonction de la pression du gaz qui sera contenu dans le réservoir et des sollicitations subies par le réservoir dans la structure dans laquelle il est intégré, de la nature et du taux de fibres ainsi que de la nature du polymère. Cette épaisseur est typiquement inférieure à ¼ de l'épaisseur e, préférentiellement inférieure à 1/10^{ème} de l'épaisseur e du réservoir et est déterminée par calcul en fonction des données citées.

L'épaisseur de la doublure interne (420, 520) est typiquement inférieure à 1/10^{ème} de l'épaisseur e, préférentiellement inférieure à 1/30^{ème} de l'épaisseur e.

[Fig.6], selon un premier mode de mise en oeuvre, adaptée à la version du réservoir représentée [Fig.4] et qui ne fait pas partie de la présente invention, une première étape (610) consiste à obtenir l'enveloppe constituant l'enveloppe interne du réservoir.

Selon un exemple de réalisation cette étape met en oeuvre un procédé d'injection plastique.

Selon une première variante, le procédé consiste à obtenir deux demi-enveloppes (621, 622) comprenant chacune des demi-espaceurs (691) creux dont les alésages (692) traversent la paroi de la demi-enveloppe respective à laquelle ils sont attachés.

Les demi-enveloppes sont ensuite assemblées, par exemple par soudage étanche, de sorte à constituer l'enveloppe interne du réservoir.

Selon une autre variante (non représentée), l'obtention de l'enveloppe interne met en oeuvre un procédé d'injection / expansion par soufflage.

À titre d'exemple non limitatif l'enveloppe interne est réalisée en polyéthylène haute densité ou en polyamide (PA6).

Si la [Fig.6] montre un exemple particulier où les espaceurs (691) sont de forme cylindrique, l'homme du métier comprend que ceux-ci peuvent prendre une grande variété de formes.

Selon une étape de drapage (620) des fibres (611, 612) continues sont déposées sur les faces externes de l'enveloppe interne (420) obtenue à l'étape précédente (610). Selon des exemples de réalisation cette étape est mise en oeuvre par drapage manuel ou automatique, par surtressage, l'enveloppe interne étant utilisée comme noyau, ou en enfilant ladite enveloppe interne (625) dans une ou plusieurs manches obtenues en tricotage 3d, ou encore par techniques d'enroulement filamentaire autour de ladite enveloppe interne (420).

Les fibres (611, 612) déposées au cours de l'étape de drapage constituent l'essentiel des renforts continus de la future enveloppe externe du réservoir objet de l'invention.

Selon la nature du matériau composite visé pour constituer l'enveloppe externe et la méthode de dépose, les fibres (611, 612) déposées lors de l'étape de drapage (620) sont des fibres sèches, des fibres pré-imprégnées d'un polymère thermodurcissable ou thermoplastique par poudrage, filmage ou comêlées.

Au cours d'une étape de piquage (630), des fibres sont piquées dans la préforme obtenue après l'étape de drapage (620), selon des lignes de piquage (604). Avantageusement les fibres ainsi piquées passent par les alésages des espaceurs et traversent toute l'épaisseur de la préforme de sorte à constituer les futurs renforts transversaux du réservoir.

Ainsi, les fibres (604) insérées par piquage dans la préforme s'étendent à la fois dans la future cavité dans les alésages des espaceurs et sensiblement perpendiculairement aux parois du réservoir qu'elles relient, mais aussi dans l'épaisseur des parois du réservoir sensiblement parallèlement à ces parois.

Au cours d'une étape d'imprégnation et de consolidation (640), l'empilement fibreux réalisant l'enveloppe extérieure est imprégné du polymère et consolidé pour obtenir un matériau composite à renfort fibreux tant dans l'enveloppe externe que dans les renforts transversaux.

Selon la nature des fibres et du ou des polymères constituant la matrice, l'étape d'imprégnation et consolidation (640) est obtenue par injection ou infusion de résine, selon des procédés connus dans le cas de fibres sèches et d'une matrice thermodurcissable, cette injection étant suivie d'une cuisson ; ou par fusion - réticulation ou fusion - consolidation si les fibres sont imprégnées d'un polymère thermodurcissable ou thermoplastique, ou une combinaison de ces différents procédés, notamment si l'enveloppe externe comprend plusieurs polymères, par exemple une matrice polymère thermoplastique sur une couche externe de sorte à améliorer sa résistance aux impacts.

Ces procédés d'imprégnation - consolidation sont connus de l'art antérieur et ne sont pas explicités plus avant. Ils sont mis en oeuvre sous vide ou sous pression, en autoclave ou dans un outillage autonome.

Comparé aux autres modes de réalisation exposés ci-après, ce premier mode de réalisation, qui ne fait pas partie de la présente invention est plus adapté à une réalisation en grande série. Les opérations de fabrication de l'enveloppe interne par injection-soudage ou injection-soufflage, la fabrication des manches de fibres par tricotage 3d ou le surtressage à partir de fibres sèches ou imprégnées d'un polymère thermoplastique et finalement les opérations d'imprégnation consolidation sont réalisables dans des sites de production distants mettant en oeuvre les moyens spécifiques correspondant.

[Fig.7], selon un autre mode de réalisation, objet de la présente invention, plus adapté, mais non exclusivement, à une fabrication sur mesure ou unitaire, une préforme sèche sensiblement prismatique est obtenue au cours d'une étape de drapage (710).

Ce mode de réalisation correspond à celui du réservoir représenté [Fig.5].

Dans ce cas, le principe général, selon des variantes de réalisation exposées ci-après, consiste à remplir la préforme fibreuse obtenue avec un liquide, et à contrôler par l'intermédiaire de ce liquide, la zone imprégnée pour la constitution de l'enveloppe externe.

Selon un exemple de réalisation, le drapage met en oeuvre des tissus tridimensionnels de type entrelacé étirables couramment désignés par le terme anglo-saxon « *interlock* », comprenant des fibres de trame reliant des faces latérales du prisme (501), et des fibres de chaîne tissés de sorte que leur orientation en section varie entre 0° et 45° (502, 503) assurant respectivement la liaison entre les 2 autres faces latérales ainsi qu'entre les faces supérieure et inférieure du prisme.

Selon une étape de piquage (720), la préforme ainsi obtenue est renforcée par des piquages (504) s'étendant entre deux faces opposées du prisme.

[Fig.8], alternativement, l'étape de drapage crée un réseau fibreux comprenant dans la zone correspondant à la future cavité interne, des espaceurs (891) constitués d'un non-tissé tridimensionnel afin de générer un volume de stockage. Dans cette variante, le réseau fibré est constitué d'un empilement de tissus de type sergé ou taffetas (805₁, 805₂) selon des directions croisées, reliant les faces latérales du réservoir.

De la même manière, cette préforme sèche est renforcée par des piquages (804) s'étendant entre des faces opposées.

Ainsi, les fibres (804) insérées par piquage dans la préforme s'étendent à la fois dans la future cavité, sensiblement perpendiculairement aux parois du réservoir qu'elles relient, mais aussi dans l'épaisseur des parois du réservoir sensiblement parallèlement à ces parois.

Les termes « non-tissés tridimensionnels » doivent être interprétés dans un sens large. Selon des exemples non-limitatifs, il s'agit d'une mousse comprenant des cellules ouvertes ou d'une natte non tissée de fils polymères.

En revenant à la [Fig.7], selon une étape de remplissage (730), préparatoire à l'imprégnation, la préforme sèche est placée dans un outillage comportant une cavité étanche tirée au vide. Une fois tirée au vide, la cavité étanche comprenant la préforme est remplie d'un liquide (731) injecté dans l'outillage.

La [Fig.9] montre un exemple de principe de cet outillage. Selon cet exemple de réalisation, l'outillage comprend une bâche (901) définissant une cavité étanche (911) dans laquelle est contenue la préforme. Ledit outillage comprend un ou plusieurs orifices d'aspiration (930) connectés à une pompe à vide (931), laquelle est protégée par une membrane semi-perméable (932) en polytétrafluoroéthylène expansé, plus couramment désigné sous le nom commercial de GoreTex^{®}, ainsi qu'un ou plusieurs orifices d'injection (935), comprenant une vanne (non représentée). La pompe (931) permet de tirer au vide la cavité (911) et l'orifice d'injection (935) de remplir ladite cavité.

Au cours de la mise en oeuvre du procédé objet de l'invention, l'outillage est placé dans une ou plusieurs enceintes successives dont la température est contrôlée.

Selon des variantes, un seul outillage est utilisé pour toutes les étapes du procédé ou des outillages spécifiques sont utilisés aux différentes étapes.

Ainsi, au cours de l'étape de remplissage (730) l'intérieur de l'outillage comprenant la préforme sèche est tiré au vide par l'orifice d'aspiration, puis rempli de liquide (731) par l'intermédiaire de l'orifice d'injection.

Selon une première variante de réalisation, le liquide (731) utilisé au cours de l'étape de remplissage est de l'eau et ladite étape de remplissage est suivie d'une étape de congélation (740). Au cours de cette étape, l'ensemble de l'outillage, comprenant la préforme complètement imbibée d'eau, est porté à une température comprise entre - 20°C et -80°C, de sorte à congeler l'eau. La préforme est alors emprisonnée dans la glace (741).

Au cours d'une étape de sublimation (750), l'ensemble est progressivement réchauffé sous vide de sorte à sublimer une partie la glace emprisonnant la préforme. Ce processus de sublimation est contrôlé par la vitesse de montée en température et la pression de vide. Ces conditions sont mises au point par des essais.

Selon une variante de mise en oeuvre, cette étape de sublimation est réalisée alors que la préforme est placée dans un outillage, les moyens d'aspiration de celui-ci étant utilisés pour contrôler le vide et l'outillage étant placé dans une enceinte permettant le contrôle de la température.

Selon une autre variante, cette étape est réalisée en sortant la préforme, prise de la glace, de l'outillage et en plaçant celle-ci dans une enceinte dite de lyophilisation dans laquelle le vide et la température sont contrôlées. Dans ce cas la préforme est replacée dans un outillage pour le déroulement des étapes suivantes.

Dans les deux cas, le chauffage étant réalisé par l'extérieur de la préforme, l'épaisseur de glace sublimée se propage depuis l'extérieur vers le centre de la préforme, asséchant par lyophilisation les fibres dans cette épaisseur, la vapeur d'eau étant aspirée soit l'orifice d'aspiration de l'outillage soit par les moyens de l'enceinte de lyophilisation.

Lorsqu'une couche d'épaisseur suffisante est lyophilisée, et le cas échéant après avoir replacée la préforme dans un outillage d'injection ou d'infusion, une résine liquide (761) est injectée ou infusée dans ladite couche, au cours d'une étape d'injection (760) de sorte à imprégner les fibres lyophilisées. Le reste des fibres de la préforme reste emprisonné dans la glace.

Ainsi, lors de l'injection de résine, seule la couche externe est imprégnée de sorte à constituer l'enveloppe externe de la préforme.

Au cours d'une étape de cuisson (770) la résine injectée dans la future enveloppe externe est réticulée pour lui conférer ses propriétés mécaniques. L'eau résultant de la fusion de la glace reste emprisonnée à l'intérieur de la préforme, dans ce qui formera la future cavité du réservoir.

L'ébauche ainsi obtenue est alors démoulée.

Au cours d'une étape de vidange (780) un ou plusieurs raccords (160) traversant l'enveloppe externe jusqu'à l'intérieur de l'ébauche obtenue à l'étape précédente, sont insérés et utilisés pour vidanger l'eau contenue à l'intérieur de ladite ébauche.

Après vidange et séchage, au cours d'une étape de consolidation (790) de la cavité alvéolée, de la résine est pulvérisée par le ou les raccords (160) à l'intérieur de la préforme de sorte à constituer la doublure étanche (520) et à imprégner les fibres dans la cavité.

En dehors de la doublure étanche (520), les fibres sont simplement imprégnées lors de la pulvérisation de sorte à leur conférer une certaine rigidité sans constituer une matrice, laissant ainsi un volume libre alvéolé à l'intérieur de la cavité pour contenir un gaz.

Selon une variante de réalisation (non représentée), le raccord installé en préparation de l'étape de vidange (780), ou une partie de celui-ci, est installée dans la préforme au moment de l'étape de drapage ou entre l'étape de drapage (720) et l'étape de préparation (730). Dans ce cas, ledit raccord est par exemple réalisé en deux parties, une desdites parties, dite connecteur, est intégrée dans la préforme, affleurante avec la face externe de la préforme, et fermée par un bouchon.

Avantageusement ce même raccord est utilisé pour remplir ou soutirer le gaz du futur réservoir, éventuellement en connectant une autre forme de raccord au connecteur.

Selon une variante de réalisation, l'étape de remplissage (730) met en oeuvre un sol-gel remplissant la cavité contenant la préforme.

Les étapes suivantes sont les mêmes jusqu'à l'étape de vidange (780) où la phase liquide du sol-gel est évaporée, à travers le ou les raccords, par exemple en chauffant l'ébauche obtenue à l'étape précédente. Ainsi, l'étape de consolidation (790) de la cavité alvéolée est réalisée par la condensation du sol-gel sur les fibres en même temps que sa vidange par évaporation de sa phase liquide.

Ainsi, selon cette variante, tant au cours de l'étape de lyophilisation qu'au cours de l'étape de vidange et consolidation combinée, le sol-gel polymérise respectivement à la surface de la future cavité côté enveloppe externe, puis à l'intérieur de la cavité du réservoir sur les fibres contenues dans cette cavité au cours de l'étape de vidange, réalisant ainsi la doublure étanche.

Selon encore un autre mode de réalisation le liquide (731) injecté au cours de l'étape de remplissage est de l'eau et le procédé se déroule tel que décrit plus haut jusqu'à et y compris l'étape de vidange (780).

Préalablement à l'étape de consolidation (790) un sol-gel est injecté dans la cavité interne préalablement vidangée de son eau et séchée.

L'étape de consolidation est ainsi réalisée par l'évaporation de la phase liquide du sol-gel et sa polymérisation sur les fibres dans la cavité interne.

Quel que soit le mode de réalisation, la proportion de fibres dans l'enveloppe externe est comprise entre 40 % et 65 % de sorte à conférer des propriétés mécaniques élevées à cette enveloppe,

La proportion de fibres dans la cavité interne est nettement réduite et comprise entre 4 % et 10 %.

Ainsi, les fibres comprises dans l'enveloppe extérieure et qui s'étendent à travers la cavité entre deux faces, participent à la résistance mécanique du réservoir tant vis-à-vis de la pression interne que des sollicitations externes, mais ménagent dans la cavité un volume apte à contenir un gaz sous pression. Ces valeurs sont indicatives d'un mode de réalisation préféré relatif à un compromis entre résistance mécanique et contenance du réservoir, mais l'homme du métier comprend que ce taux de fibres dans la cavité est, selon l'application visée, avantageusement augmenté pour accroître la résistance mécanique au détriment de la contenance ou inversement.

Les modes de réalisation exposés ci-avant considèrent une cavité interne d'un volume unique, les renforts transversaux s'étendant dans ladite cavité sans réaliser une compartimentation de celle-ci.

L'homme du métier comprend que le procédé objet de l'invention permet, quel que soit le mode de réalisation considéré, la création d'une cavité interne compartimentée, celui-ci étant aisément adapté en mettant en oeuvre les étapes décrites compartiment par compartiment, sauf en ce qui concerne l'imprégnation et la consolidation de l'enveloppe extérieure.

En revenant à la [Fig.1], quel que soit le procédé mis en oeuvre, l'outillage comporte un ou plusieurs raccords (160) destinés à remplir et à soutirer le réservoir. Lesdits raccords sont avantageusement intégrés à la préforme fibreuse avant son imprégnation par le polymère.

[Fig.10] selon un premier exemple de réalisation, le raccord (130) comprend une partie externe pour y raccorder un conduit et une partie interne (331) s'étendant à travers l'enveloppe composite (510) du réservoir jusque dans la cavité interne (590). Le raccord (130) est par exemple réalisé dans un matériau métallique, qui, selon l'application visée, est choisi résistant au phénomène de fragilisation par l'hydrogène, par exemple un alliage de cuivre ou d'aluminium.

Selon cet exemple de réalisation, la partie (1031) du raccord s'étendant à l'intérieur du réservoir est filetée. Ce filetage (131) confère au raccord une résistance à l'arrachement sans endommager les fibres.

[Fig.11], selon un autre exemple de réalisation le raccord (140) est intégré à un bloc raccord (1140) réalisé dans un matériau métallique, qui selon l'application visée est choisi résistant au phénomène de fragilisation par l'hydrogène, par exemple un alliage de cuivre ou d'aluminium.

La [Fig.11] représente un raccord (140) de type femelle, mais l'homme du métier comprend qu'un raccord de type mâle est réalisable selon les mêmes principes.

Le bloc raccord (1140) comprend une aiguille (1141), de préférence conique, apte à pénétrer dans l'empilement fibreux jusque dans la cavité (590) contenant le gaz, sans dégrader les fibres.

Une ou plusieurs bandes de maintien (160), métalliques, ou de préférence composites, obtenues par enroulement filamentaire, s'étendent autour du réservoir et assurent la tenue du bloc raccord (1140) contre le réservoir.

[Fig.12], selon un autre exemple de réalisation, le raccord (150) comprend une aiguille annelée (1251) pénétrant, à travers l'enveloppe externe (510) et l'empilement fibreux, jusqu'à l'intérieur de la cavité (590) du réservoir. Comme selon les exemples de réalisation précédents, le raccord (150) est constitué d'un matériau métallique, le cas échéant résistant à la fragilisation par l'hydrogène tel qu'un alliage de cuivre ou d'aluminium.

Selon cet exemple de réalisation, ledit raccord est maintenu en position par une bride métallique (1250) laquelle est également maintenue par une ou plusieurs bandes de maintien (160).

Bien que les exemples précédents montrent l'intégration des différentes variantes de raccord dans un réservoir réalisé selon la version représentée [Fig.5], l'homme du métier comprend que ces modes de réalisation sont applicables aux versions du réservoir représenté [Fig.4] et [Fig.8].

La description ci-avant et les exemples de réalisation montrent que l'invention atteint le but visé en proposant un procédé économique adapté à la fabrication en série ou à l'unité d'un réservoir composite prismatique comprenant une cavité interne étanche apte à contenir un gaz sous pression et des renforts transversaux traversant ladite cavité entre des faces non contiguës du réservoir.

## Revendications

1. Procédé pour la fabrication d'un réservoir (100, 201, 202, 301, 302) composite à renfort fibreux continu, de forme prismatique d'une épaisseur e, pour le stockage d'un gaz sous pression dans une cavité interne dudit réservoir, lequel réservoir comprend des fibres (504, 804) s'étendant entre deux faces non contiguës dudit réservoir à travers la cavité interne (590), comprenant des étapes consistant à :
i. obtenir (720) une préforme fibreuse prismatique d'une épaisseur e comprenant des renforts continus tridimensionnels dans toute son épaisseur ;
ii. imprégner (760) une couche externe (510) de ladite préforme par un polymère sur une épaisseur (571) inférieure à 1/4 de l'épaisseur e de sorte à constituer une enveloppe externe composite s'étendant sur toutes les faces du prisme ;
iii. réaliser (790) une couche étanche (520) constituant une doublure interne, d'une épaisseur (572) inférieure à 1/10^{ème} de l'épaisseur e entre l'enveloppe externe et le réseau fibreux contenu dans la cavité du réservoir ;
**caractérisé en ce que** l'étape ii) comprend des étapes consistant à :
ii.a emballer la préforme obtenue à l'étape i) dans une enceinte étanche ;
ii.b. tirer au vide l'enceinte comprenant la préforme ;
ii.c remplir (730) l'enceinte comprenant la préforme d'un liquide (731) ;
ii.d congeler (740) la préforme imbibée du liquide ;
ii.e lyophiliser (750) une couche extérieure de la préforme ;
ii.f imprégner (760) ladite couche extérieure d'un polymère de sorte à constituer l'enveloppe extérieure ;
ii.g évacuer (780) le liquide restant dans la préforme

2. Procédé selon la revendication 1, dans lequel le liquide (731) introduit à l'étape ii.c) est de l'eau.

3. Procédé selon la revendication 1, dans lequel le liquide (731) introduit à l'étape ii.c) est un sol-gel.

4. Procédé selon la revendication 1, comprenant une étape, avant ou après l'étape ii) d'imprégnation de l'enveloppe externe, consistant à intégrer à la préforme un raccord (130, 140, 150) traversant ladite enveloppe externe (510) et apte à mettre en communication fluidique l'intérieur de la préforme et l'extérieur.

5. Procédé selon la revendication 4 dans lequel le liquide injecté à l'étape ii.c) est de l'eau et dans lequel le raccord est utilisé dans l'étape ii.g) pour évacuer l'eau de la préforme par aspiration et qui comprend au cours de l'étape iii), une fois l'eau évacuée, une étape consistant à :
iii.b consolider (790) le réseau fibreux dans la cavité interne.

6. Procédé selon la revendication 4, dans lequel l'étape iii.b) comprend la pulvérisation d'un polymère à travers le raccord (130) à l'intérieur de la préforme de sorte à constituer la doublure interne (520, 820) et à consolider le réseau fibreux dans ladite cavité.

7. Procédé selon la revendication 4, dans lequel l'étape iii.b) comprend l'injection d'un sol-gel dans la cavité interne et la consolidation du réseau fibreux dans ladite cavité par l'évaporation de la phase liquide du sol-gel.

8. Procédé selon la revendication 4, dans lequel le liquide injecté est un sol-gel et dans lequel le raccord est utilisé au cours de l'étape ii.g) pour évaporer la phase liquide du sol-gel à l'intérieur de la préforme, l'étape iii) étant réalisée par la polymérisation du sol-gel.

9. Procédé selon la revendication 4, comprenant après l'étape iii) une étape consistant à :
iv. créer des bandes de maintien (160) entourant le réservoir par enroulement filamentaire.

## Patentansprüche

1. Verfahren zur Herstellung eines durchgehend faserverstärkten Verbundtanks (100, 201, 202, 301, 302) prismatischer Form und einer Stärke *e* zum Speichern eines Druckgases in einem inneren Hohlraum des Behälters, wobei der Behälter Fasern (504, 804) umfasst, die sich zwischen zwei nicht benachbarten Seiten des Behälters durch den inneren Hohlraum (590) erstrecken, umfassend Schritte, die aus Folgendem bestehen:
i. Erlangen (720) eines prismatischen faserigen Vorformlings mit einer Stärke e, umfassend dreidimensionale kontinuierliche Verstärkungen über seine gesamte Stärke;
ii. Imprägnieren (760) einer äußeren Schicht (510) des Vorformlings mit einem Polymer über eine Stärke (571) von weniger als 1/4 der Stärke e, um eine äußere Verbundhülle zu bilden, die sich über alle Seiten des Prismas erstreckt;
iii. Herstellen (790) einer dichten Schicht (520), die eine innere Auskleidung darstellt, mit einer Stärke (572), die kleiner ist als 1/10 der Stärke e zwischen der äußeren Hülle und dem Fasernetzwerk, das in dem Hohlraum des Behälters enthalten ist; **dadurch gekennzeichnet, dass** Schritt ii) Schritte umfasst, die aus Folgendem bestehen:
ii.a Verpacken des in Schritt i) erlangten Vorformlings in einer dichten Umhüllung;
ii.b. Evakuieren der Umhüllung, die den Vorformling umfasst;
ii.c Füllen (730) der Umhüllung, die den Vorformling umfasst, mit einer Flüssigkeit (731);
ii.d Einfrieren (740) des mit der Flüssigkeit getränkten Vorformlings;
ii.e Lyophilisieren (750) einer äußeren Schicht des Vorformlings;
ii.f Imprägnieren (760) der äußeren Schicht mit einem Polymer, um die äußere Hülle zu schaffen;
ii.g Ableiten (780) der restlichen Flüssigkeit in dem Vorformling.

2. Verfahren nach Anspruch 1, wobei die in Schritt ii.c) eingeführte Flüssigkeit (731) Wasser ist.

3. Verfahren nach Anspruch 1, wobei die in Schritt ii.c) eingeführte Flüssigkeit (731) ein Sol-Gel ist.

4. Verfahren nach Anspruch 1, umfassend einen Schritt vor oder nach Schritt ii) eines Imprägnierens der äußeren Hülle, der darin besteht, in den Vorformling ein Verbindungsstück (130, 140, 150) zu integrieren, das die äußere Hülle (510) durchquert und geeignet ist, um die Innenseite des Vorformlings und die Außenseite in Fluidverbindung zu bringen.

5. Verfahren nach Anspruch 4, wobei die in Schritt ii.c) eingespritzte Flüssigkeit Wasser ist und wobei das Verbindungsstück in Schritt ii.g) zum Ablassen von Wasser durch Absaugen aus dem Vorformling verwendet wird und das in Schritt iii), nachdem das Wasser entfernt wurde, einen Schritt umfasst, bei dem: iii.b das Fasernetzwerk in dem inneren Hohlraum konsolidiert (790) wird.

6. Verfahren nach Anspruch 4, wobei Schritt iii.b) das Pulverisieren eines Polymers durch das Verbindungsstück (130) in die Innenseite des Vorformlings umfasst, um die innere Auskleidung (520, 820) zu schaffen und das Fasernetzwerk in dem Hohlraum zu konsolidieren.

7. Verfahren nach Anspruch 4, wobei Schritt iii.b) das Einspritzen eines Sol-Gels in den inneren Hohlraum und das Konsolidieren des Fasernetzwerks in dem Hohlraum durch Verdampfen der flüssigen Phase des Sol-Gels umfasst.

8. Verfahren nach Anspruch 4, wobei die eingespritzte Flüssigkeit ein Sol-Gel ist und wobei das Verbindungsstück in Schritt ii.g) zum Verdampfen der flüssigen Phase des Sol-Gels im Inneren des Vorformlings verwendet wird, wobei Schritt iii) durch Polymerisation des Sol-Gels durchgeführt wird.

9. Verfahren nach Anspruch 4, umfassend nach Schritt iii) einen Schritt, der aus Folgen dem besteht:
iv. Erzeugen von Haltebändern (160), die den Behälter durch Filamentwicklung umgeben.

## Claims

1. A method of making a continuous fiber-reinforced composite tank (100, 201, 202, 301, 302) of prismatic shape and thickness e for storing a pressurized gas in an internal cavity of said tank, which tank includes fibers (504, 804) extending between two non-contiguous sides of said tank through the internal cavity (590), comprising the steps consisting of:
i. obtaining (720) a prismatic fibrous preform of thickness e comprising three-dimensional continuous reinforcements throughout its thickness;
ii. impregnating (760) an outer layer (510) of said preform with a polymer to a thickness (571) of less than 1/4 of the thickness *e* so as to form a composite outer envelope extending over all faces of the prism;
iii. making (790) a watertight layer (520) constituting an internal lining, with a thickness (572) less than 1/10th of the thickness e between the external envelope and the fibrous network contained in the tank cavity;
**characterised in that** the method further comprises the steps consisting of:
ii.a packing the preform obtained in step i) in a sealed enclosure;
ii.b. evacuating the enclosure comprising the preform;
ii.c filling (730) the enclosure comprising the preform with a liquid (731);
ii.d freezing (740) the preform soaked in the liquid;
ii.e freeze-drying (750) an outer layer of the preform;
ii.f impregnating (760) said outer layer with a polymer so as to form the outer shell;
ii.g removing (780) the liquid remaining in the preform

2. The method of claim 1, wherein the liquid (731) introduced in step ii.c) is water.

3. The method of claim 1, wherein the liquid (731) introduced in step ii.c) is a sol-gel.

4. Method according to claim 1, comprising a step, before or after step ii) consisting of impregnating the external envelope, consisting in integrating into the preform a connection (130, 140, 150) passing through the said external envelope (510) and capable of placing the inside of the preform and the outside in fluid communication.

5. A method according to claim 4 wherein the liquid injected in step ii.c) is water and wherein the connector is used in step ii.g) for removing water from the preform by suction and which comprises in step iii), once the water has been removed, a step consisting of: iii.b consolidating (790) the fibrous network in the internal cavity.

6. The method of claim 4, wherein step iii.b) comprises spraying a polymer through the seam (130) into the preform so as to form the inner liner (520, 820) and consolidate the fibrous network in said cavity.

7. A method according to claim 4, wherein step iii.b) comprises injecting a sol-gel into the internal cavity and consolidating the fibrous network in said cavity by evaporating the liquid phase of the sol-gel.

8. The method of claim 4, wherein the injected liquid is a sol-gel and wherein the fitting is used in step ii.g) to evaporate the liquid phase of the sol-gel within the preform, step iii) being carried out by polymerising the sol-gel.

9. A method according to claim 4, comprising after step iii) a step consisting of:
iv. creating holding bands (160) surrounding the tank by filament winding.
